# EUROPÄISCHE PATENTSCHRIFT

(11) **EP 4 405 762 B1**
(45) Veröffentlichungstag und Bekanntmachung des Hinweises auf die Patenterteilung: **01.10.2025**
(21) Anmeldenummer: 22803321.3
(22) Anmeldetag: 24.10.2022
(51) Int. Cl.: G05B 19/042

(54) **VERFAHREN ZUM BETREIBEN EINES GERÄTS IN EINEM IOT-SYSTEM**
METHOD FOR OPERATING A DEVICE IN AN IOT SYSTEM
PROCÉDÉ DE FONCTIONNEMENT D'UN APPAREIL DANS UN SYSTÈME IDO

(30) Priorität: 02.11.2021 EP 21205887
(43) Veröffentlichungstag der Anmeldung: 31.07.2024
(73) Patentinhaber: Siemens Aktiengesellschaft, 80333 München (DE)
(72) Erfinder: BATZ, Sascha, 91334 Hemhofen (DE); NIESSEN, Stefan, 91056 Erlangen (DE); THIEM, Sebastian, 91413 Neustadt an der Aisch (DE)
(74) Vertreter: Siemens Patent Attorneys
(86) Internationale Anmeldenummer: PCT/EP2022/079643
(87) Internationale Veröffentlichungsnummer: WO 2023/078719

(56) Entgegenhaltungen:
- US-A1- 2015 046 125
- US-A1- 2018 026 840
- US-A1- 2020 103 844
- US-A1- 2020 192 319

## Beschreibung

Verfahren zum Betreiben eines Geräts in einem IoT-System Die Erfindung betrifft ein Verfahren zum Betreiben eines Geräts, im folgenden als Feldgerät bezeichnet, in einem System mit einer IoT-Plattform.

Unterschiedlichste Feldgeräte werden heutzutage mit einer IT-Infratruktur, üblicherweise als Cloud bezeichnet, verbunden, um beispielsweise eine Steuerung oder eine Überwachung des Feldgeräts zu ermöglichen, oder um von ihm erfasste Daten für beliebige Analysen auszulesen. Dies geschieht über eine IoT-Plattform, die ähnlich einem Betriebssystem den Zugriff auf das Feldgerät und eine bidirektionale Kommunikation ermöglicht. Aus der Druckschrift US 2018/026840 A1 ist eine Kommunikationsarchitektur Plattform-zu-Plattform für einen Prozesssteuerungs-Messaging-Dienst in einem Prozessleitsystem oder einer anderen industriellen Umgebung bekannt, welche eine Kommunikation zwischen Feldgeräten und einer IoT Plattform ermöglicht. Die Druckschrift US 2020/103844 A1 beschreibt ein System und Verfahren zum Konfigurieren einer Mehrzahl von Feldvorrichtungen, wobei das System und das Verfahren eine einzelne Anwendung oder ein einzelnes Dienstprogramm bereitstellen, die bzw. das einem Benutzer ermöglicht, Konfigurationsänderungen anzuzeigen, vorzunehmen und zu ändern. Die Druckschrift US 2015/046125 A1 beschreibt ein Verfahren zum Bedienen eines Feldgeräts.

Das Betreiben des Feldgeräts umfasst auch seine Inbetriebnahme mit der erstmaligen Verbindung des Feldgeräts mit der IoT-Plattform, auch als Anbindung des Feldgeräts oder IoT-Integration bezeichnet.

Ein Beispiel für ein IoT-System mit mindestens einem Feldgerät umfasst ein Energiemanagesystem eines Gebäudes oder eines Industriestandorts. In dem Gebäude sind typischerweise viele Feldgeräte vorhanden und zu Anlagen zusammengefasst. Als Anlagen können Wärmepumpen, Photovoltaik-Anlagen, Elektroladesäulen und/oder üblicherweise als Batterie bezeichnete Akkumulatoren vorhanden sein. Das Energiemanagementsystem kann einen optimalen "Fahrplan" für die Erzeugung von Energie/Versorgung und den Verbrauch berechnen. Dafür benötigt es Daten der Anlagen bzw. Feldgeräte, die einem Datenblatt des Feldgeräts entnommen werden können, beispielsweise die maximale Lade- und Entladeleistung der Batterie und ihre Kapazität. Ferner benötigt das Energiemanagementsystem Informationen über den aktuellen Zustand des Energiesystems, hierfür muss es vom Feldgerät erfasste Daten auslesen. Weiter muss es die Anlagen während des Betriebs steuern, um die Energieversorgung zu optimieren.

Die Anlagen bzw. die Feldgeräte müssen also an das Energiemanagementsystem angebunden werden. Insbesondere werden in der Regel auch in ein bestehendes Energiemanagementsystem mit bereits angebundenen Feldgeräten weitere Feldgeräte angebunden, also integriert. Dies ist nach derzeitigem Stand der Technik aufwändig, zeitintensiv und fehleranfällig, was am Beispiel der Batterie verdeutlicht werden kann: jemand muss vor Ort den Hersteller und Typ der Batterie identifizieren und sich das dazugehörige Datenblatt verschaffen. Anschließend muss er mit Hilfe des Datenblatts recherchieren, über welches Protokoll die Batterie angesprochen werden kann (bspw. Modbus, BACNet, ...). Außerdem muss ermittelt werden, auf welchen Registern welche Messwerte bzw. Daten (bspw. der Ladezustand der Batterie) liegen und in welcher Einheit/ welchem Format, sowie über welche Register die Batterie gesteuert werden kann (bspw. ihre Lade- bzw. Entladeleistung). Alle diese Daten werden dann typischerweise an einem Terminal in ein entsprechendes Formular/Maske/UI eingegeben, erst dann ist die Anbindung des weiteren Feldgeräts möglich.

Wenn das weitere Feldgerät nach der Anbindung betrieben wird, ist es Alterungsprozessen und Fehlerquellen ausgesetzt, die u.U. zum Ausfall einer gesamten Anlage führen können.

Aufgabe der Erfindung ist es, die Anbindung eines weiteren Feldgeräts an eine IoT-Plattform zu vereinfachen, die Fehleranfälligkeit zu reduzieren und seinen weiteren Betrieb zu verbessern.

Diese Aufgaben werden gelöst durch ein Verfahren mit den Merkmalen des Patentanspruchs 1 und ein System mit den Merkmalen des Patentanspruchs 13.

Vorteilhafte Ausgestaltungen der Erfindung sind in den Unteransprüchen angegeben.

Die Erfindung sieht die Verwendung einer Datenbank vor, in der die für den Anschluss eines Feldgeräts notwendigen Daten (im Folgenden als Konnektivitätsdaten bezeichnet) mit jeweils zugehöriger Geräte-ID gespeichert sind und auf die die IoT-Plattform zugreifen kann. Die Geräte-ID dient zur Identifikation eines Feldgeräts. Die Datenbank umfasst dabei sowohl Geräte-IDs und Konnektivitätsdaten von Feldgeräten, die an die IoT-Plattform angebunden sind, als auch eine Geräte-ID und Konnektivitätsdaten mindestens eines sonstigen Feldgeräts, d.h. eines Feldgeräts, das bisher nicht an die IoT-Plattform angebunden ist. Das Verfahren sieht vor, lediglich eine Geräte-ID des weiteren Feldgeräts an die IoT-Plattform zu senden. Diese wird mit den in der Datenbank gespeicherten Geräte-IDs verglichen, und bei einer Übereinstimmung werden die zu der Geräte-ID zugehörigen Konnektivitätsdaten an die IoT-Plattform übermittelt. Es wird also insbesondere verglichen, ob die Geräte-ID des weiteren Feldgeräts mit einer Geräte-ID eines sonstigen Feldgeräts, dessen Daten wie oben beschrieben in der Datenbank gespeichert sind, übereinstimmt. Wenn dies der Fall ist, kann die Verbindung zwischen dem weiteren Feldgerät und der IoT-Plattform anhand der übermittelten Konnektivitätsdaten des zugehörigen sonstigen Feldgeräts hergestellt werden, da die Konnektivitätsdaten des sonstigen Feldgeräts für die Anbindung des weiteren Feldgeräts zutreffend sind. Das anzubindende weitere Feldgerät kann auch vom gleichen Typ wie ein bereits angebundenes Feldgerät sein und dieselbe Geräte-ID aufweisen, in diesem Fall werden nach Vergleich der Geräte-IDs die Konnektivitätsdaten des zugehörigen Feldgeräts übermittelt und für die Anbindung des weiteren Feldgeräts verwendet.

Es werden - insbesondere im Verlauf des weiteren Betriebs des weiteren Feldgeräts oder der Anlage - weitere Gerätedaten des weiteren Feldgeräts an die IoT-Plattform übermittelt und in der Datenbank unter Zuordnung zur Geräte-ID gespeichert. Dadurch werden ein stetiges Lernen und Erweitern der Datenbank bzw. der IOT-Plattform ermöglicht. Die weiteren Gerätedaten des weiteren Feldgeräts und ggf. weiterer an die IoT-Plattform angeschlossener Feldgeräte werden ausgewertet, und basierend auf der Auswertung wird ein Signal zur Steuerung und/oder Regelung des weiteren Feldgeräts und/oder anderer an die IoT-Plattform direkt oder indirekt angeschlossener Feldgeräte oder Anlagen ausgegeben.

Für den Fall, dass die übermittelte Geräte-ID des weiteren Feldgeräts in der Datenbank nicht vorhanden ist, wird die Geräte-ID in der Datenbank gespeichert. Ferner werden die Konnektivitätsdaten angefordert, beispielsweise sendet die IoT-Plattform eine Anfrage an eine andere Datenbank oder an den Benutzer des weiteren Feldgeräts oder der Anlage. Nach Erhalt und Speicherung in der Datenbank ist die Anbindung wie beschrieben möglich.

Für den Fall, dass die übermittelte Geräte-ID des weiteren Feldgeräts in der Datenbank vorhanden ist, aber keine zugehörigen Konnektivitätsdaten vorhanden sind, werden die Konnektivitätsdaten wie oben angefordert und gespeichert. Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Die vorliegende Erfindung weist beispielsweise den Vorteil auf, dass Zeitaufwand und Kosten für die Anbindung bzw. für den Anschluss der Geräte an die Cloud reduziert werden können. Weiterhin ist das erfindungsgemäße Verfahren weniger fehleranfällig. Insbesondere können weitere Applikationen, wie Energiemanagementsysteme, deutlich effizienter in Betrieb genommen werden. Weiterhin sind die übermittelten/gespeicherten Daten einer Datenanalyse zugänglich, sodass weitere Fehlerquellen und/oder Einsparpotenziale erkannt und verwendet werden können.

Insbesondere ermöglicht das erfindunsgemäße Verfahren ein effizientes Anbinden von Geräten (engl. Devices bzw. Edge-Devices) an eine IOT-Plattform, ein Erweitern der Datenbank durch Daten aus dem Feld, die über die dann angebundene IOT-Plattform zur Datenbank rückgespielt werden, sowie ein Kategorisieren der Daten, bspw. gemäß für den Techniker leicht erkennbarer abstrahierter Klassen.

Die Geräte-ID kennzeichnet nicht das individuelle Feldgerät bzw. individuelle weitere Feldgerät, sondern dessen Typ, vorzugsweise einschließlich aller für seinen Einsatz relevanten Details (beispielsweise Hersteller, Baureihe, Produktionszeitpunkt und weiteres). Gemäß einer Ausführungsform wird als Geräte-ID ein Bild des weiteren Feldgeräts oder von einem Teil des weiteren Feldgeräts, bespielsweise von einem Label, übermittelt. Die Geräte-ID kann auch ein Barcode oder ein QR-Code sein, oder es kann der Produktname, evtl. in Verbindung mit dem Herstellernamen verwendet werden.

Dadurch wird vorteilhafterweise eine Identifikation des weiteren Feldgerätes, insbesondere bei unbekannten Konnektivitätsdaten, ermöglicht.

Gemäß einer Ausführungsform enthalten die Konnektivitätsdaten eine Information über einen Anschluss, ein Protokoll, ein Register und/oder ein abstraktes generisches Device-Modell.

Dadurch können vorteilhafterweise die für die Anbindung des weiteren Feldgerätes erforderlichen Konnektivitätsdaten verbessert ermittelt werden.

Vorzugsweise fordert die IoT-Plattform die weiteren Gerätedaten an, die insbesondere ebenfalls gespeichert werden. Beispielsweise kann die IoT-Plattform einen Techniker/ Benutzer vor Ort auffordern, diese weiteren Daten einzugegeben. Nach dieser Benutzereingabe werden die eingetragenen Daten an die IoT-Plattform übermittelt. Insbesondere erkennt die IoT-Plattform, welche Daten fehlen bzw. besondere Bedeutung für das Herstellen der Verbindung haben. Der Benutzer wird somit nicht zur Eingabe fester oder aller weiteren Gerätedaten aufgefordert, sondern lediglich zur Eingabe von om genannten Sinne brauchbaren Daten.

Für den Vergleich der Geräte-ID des weiteren Feldgeräts mit in der Datenbank gespeicherten Geräte-IDs kann ein Verfahren/ Algorithmus der KI und damit ein neuronales Netz verwendet werden. Das ist insbesondere vorteilhaft, wenn als Geräte-ID ein Bild verwendet wird. Das Bild kann bevorzugt mittels eines Smartphones erfasst worden sein. Das neuronale Netz (KI) ist entsprechend anhand von bekannten Bildern bekannter Anlagen trainiert. Beispielsweise kann das Training mittels verschiedener Fotos/Bilder von Feldgeräten von verschiedenen Herstellern erfolgen. Dadurch ist vorteilhafterweise ein herstellerübergreifendes Erkennen/Andbinden möglich. Mit anderen Worten wird ein Bild des weiteren Feldgerätes erfasst, an die IoT-Plattform übermittelt, woraufhin das neuronale Netz das weitere Feldgerät erkennt, die zugehörigen Konnektivitätsdaten ermittelt und anschließend übermittelt.

Als weitere Gerätedaten können Positionsdaten des weiteren Feldgeräts, insbesondere GPS-Koordinaten seines Aufstellorts, an die IoT-Plattform übermittelt und gespeichert werden. Anhand der Positionsdaten kann dann eine Verknüpfung mit externen positionsspezifischen Daten (z.B. Klima oder Wetter) erfolgen. Weiter kann aus der Verknüpfung oder aus den externen positionsspezifischen Daten eine probabilistische Aussage oder eine Simulation hinsichtlich einer Lebensdauer oder einer Schadensursache abgeleitet werden.

Alternativ oder zusätzlich können als weitere Gerätedaten Betriebsdaten, die im Betrieb des weiteren Feldgeräts erfasst werden, übermittelt und gespeichert werden. Es ist ferner vorteilhaft, diese Betriebsdaten beim Betrieb des weiteren Feldgeräts nachfolgend, vorzugsweise regelmäßig/laufend zu aktualisieren. Dadurch ist eine fortlaufende Überwachung und/oder Analysen bezüglich der zeitlichen Entwicklung von Parametern oder andere Datenanalysen möglich.

Alternativ oder zusätzlich kann eine Kategorisierung der Geräte, deren Geräte-IDs in der Datenbank gespeichert sind, erstellt werden. Hierzu kann eine abstrakte Beschreibung von Kategorien an Devices zu erstellen (z.B. einer Wärmepumpe, oder einer Wärmepumpe mit leistungsgeregeltem Verdichter) erstellt werden. Hierdurch können die anfänglich vorhandenen Daten sowie zusätzlich aus dem Feld gesammelten Daten (weitere Gerätedaten) strukturiert abgelegt werden sowie strukturiert verarbeitet und datenanalytischen weiteren Analysen zugänglich gemacht werden. Es kann beispielsweise in Abhängigkeit von Standort, Wettereinfluss und/oder weiteren Parametern die Performance, die Alterung usw. eines Feldgeräts analysiert werden.

Die Erfindung wird im Folgenden anhand von Ausführungsbeispielen sowie anhand der Figuren näher erläutert. Es zeigen
Figur 1 eine schematische Darstellung eines IoT-Systems gemäß einer Ausgestaltung der vorliegenden Erfindung; und
Figur 2 ein Flussdiagramm des erfindungsgemäßen Verfahrens.

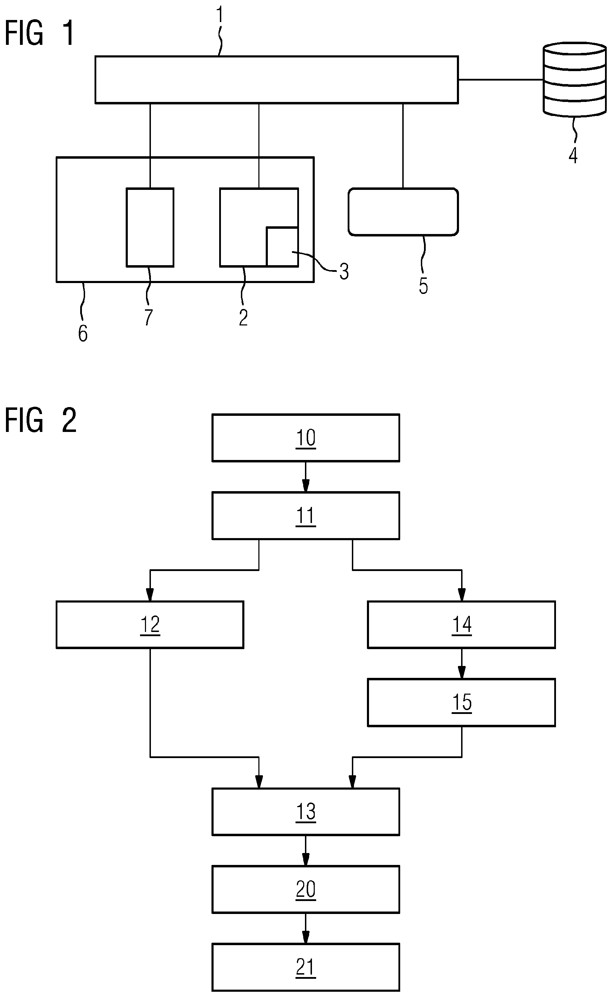

Fig.1 zeigt ein IoT-System mit einer IoT-Plattform 1 und einem Energiemanagementsystem 6, das u.a. eine Batterie 2 als weiteres Feldgerät umfasst. Die Batterie 2 weist eine Geräte-ID 3 in Form eines QR-Codes auf. Als Feldgerät weist das Energiemanagementsystem 6 eine Photovoltaik-Anlage 7 auf, die bereits an die IoT-Plattform angeschlossen ist und die die Batterie 2 laden kann. Die IoT-Plattform 1 kann auf eine Datenbank 4 zugreifen, in der Geräte-IDs der PV-Anlage und die Geräte-IDs mehrerer Batterien als sonstige Feldgeräte jeweils mit zugehörigen Konnektivitätsdaten gespeichert sind. Die Datenbank kann für ein Feldgerät ggf. mehrere Geräte-IDs speichern. Ferner ist ein mit der IoT-Plattform verbundenes Terminal 5 vorhanden.

Um die in der Figur 1 dargestellte Verbindung zwischen dem weiteren Feldgerät 2 und der IoT-Plattform 1 herzustellen und dadurch das weitere Feldgerät anzubinden, werden die in Figur 2 dargestellten Schritte durchgeführt.

Im Schritt 10 erfolgt die Eingabe einer Geräte-ID, hier der QR-Code 3, am Terminal 5, indem beispielsweise ein Techniker das Bild des QR-Codes 3 über ein User Interface zur IoT-Plattform hochlädt.

In Schritt 11 wird die Geräte-ID 3 von der IoT-Plattform an die Datenbank 4 gesendet, diese prüft, ob die Geräte-ID vorhanden ist und ob zu der Geräte-ID zugehörige Konnektivitätsdaten gespeichert sind. Falls beides bejaht wird, werden in Schritt 12 die Konnektivitätsdaten, insbesondere das verwendete Protokoll sowie Register und weitere benötigte Parameter, an die IoT-Plattform übermittelt, und die IoT-Plattform stellt mit Hilfe dieser Konnektivitätsdaten die Verbindung mit dem weiteren Feldgerät 2 her (Schritt 13). Andernfalls wird der Nutzer zur Eingabe der benötigten Konnektivitätsdaten am Terminal aufgefordert (Schritt 14), diese Daten werden der Geräte-ID zugeordnet gespeichert bzw. wenn in der Datenbank die Geräte-ID nicht vorhanden ist, wird ein entsprechender neuer Datensatz angelegt und die Geräte-ID gespeichert, (Schritt 15). In jedem dieser Fälle wird dann die Verbindung mit dem weiteren Feldgerät hergestellt (Schritt 13).

Nach Herstellung der Verbindung übermittelt die Batterie 2 weitere Gerätedaten an die IoT-Plattform (Schritt 20), beispielsweise ihren aktuellen Ladezustand. Ebenso übermittelt die Photovoltaik-Anlage weitere Gerätedatem, beispielsweise Kenndaten wie ihren Standort und/oder Betriebsdaten wie ihre aktuelle Leistung. Die weiteren Gerätedaten werden ausgewertet und ein daraus abgeleitetes Signal erzeugt (Schritt 21), das zur Steuerung und/oder Regelung der Batterie oder eines beliebigen Feld-geräts, das an die IoT-Plattform direkt oder indirekt angeschlossen ist, verwendet werden kann. Ferner werden die weiteren Gerätedaten in der Datenbank gespeichert.

Im beschriebenen Beipiel kann die Alterung der Batterie oder ihr Wirkungsgrad aus übermittelten Betriebsdaten (beispielsweise die benötigte Ladedauer oder die erreichte Kapazität) über einen bestimmten Zeitraum ermittelt werden. Diese Auswertung der Betriebsdaten kann für die Steuerung des Ladevorgangs durch die PV-Anlage eingesetzt werden, oder es kann ein Signal ausgegeben werden, das Wartungsmaßnahmen oder den notwendigen Wechsel der Batterie aufgrund der Alterungserscheinungen anzeigt.

Aus den Betriebsdaten Temperatur und Leistung der PV-Anlage kann beispielsweise die Temperaturabhängigkeit des Wirkungsgrades der Solarzellen ermittelt werden. Mithilfe der Positionsdaten können zukünftige Wetterbedingungen und damit die erwartete Leistung ermittelt werden. Eine solche Auswertung ermöglich die Steuerung des Ladevorgangs der Batterie und/oder die Steuerung von Verbrauchern im Energiemanagementsystem.

Durch die Übermittlung von weiteren Gerätedaten an die IoT-Plattform, die in der Datenbank gespeichert werden, ist eine Vielzahl unterschiedlicher Auswertungen möglich. Beispielsweise kann als bevorzugte Auswertung eine probabilistische Verteilung zur Leistungszahl (coefficient of performance, COP) oder eines anderen Parameters einer Wärmepumpe eines bestimmten Herstellers und eines bestimmten Typs berechnet werden. Diese Information kann weiteren Anwendungen, z.B. einem Energiemanagementsystem oder einem anderen System zur Fertigungsoptimierung bereitgestellt werden, um mit einer initialen Konfiguration bzw. Parametrierung eine verbesserte Steuerung des Systems zu ermöglichen.

## Patentansprüche

1. Verfahren zum Betreiben eines weiteren Feldgeräts in einem System mit einer IoT-Plattform, die Zugriff auf eine Datenbank hat, wobei in der Datenbank eine den Gerätetyp kennzeichnende Geräte-ID und Konnektivitätsdaten für mindestens ein Feldgerät, das an die IoT-Plattform angebunden ist, und eine den Gerätetyp kennzeichnende Geräte-ID und Konnektivitätsdaten eines sonstigen Feldgeräts gespeichert sind, mit folgenden Schritten:
i. Übermitteln einer den Gerätetyp kennzeichnenden Geräte-ID (3) des weiteren Feldgeräts an die IoT-Plattform (1)
ii. Vergleichen der Geräte-ID (3) des weiteren Feldgeräts mit in der Datenbank (4) gespeicherten Geräte-IDs der Feldgeräte und der sonstigen Feldgeräte
iii. bei einer Übereinstimmung der Geräte-ID des weiteren Feldgerätes mit einer in der Datenbank (4) gespeicherten Geräte-ID: Übermitteln der zur Geräte-ID des weiteren Feldgeräts (3) zugehörigen Konnektivitätsdaten an die IoT-Plattform (1),
- Herstellen einer Verbindung zwischen dem weiteren Feldgerät (2) und der IoT-Plattform (1) unter Verwendung der übermittelten Konnektivitätsdaten,
- Übermitteln von weiteren Gerätedaten des weiteren Feldgeräts (2) an die IoT-Plattform (1) und Speichern der weiteren Gerätedaten des weiteren Feldgeräts zugeordnet zur Geräte-ID in der Datenbank (4),
- Auswerten der weiteren Gerätedaten des weiteren Feldgeräts (2) und/oder anderer an die IoT-Plattform (1) angeschlossener Geräte (7),
- Ausgeben eines auf der Auswertung basierenden Signals für den Betrieb des weiteren Feldgeräts (2) und/oder anderer an die IoT-Plattform direkt oder indirekt angeschlossener Geräte (7).

2. Verfahren nach Anspruch 1, **dadurch gekennzeichnet, dass** die Konnektivitätsdaten eine Information über einen Anschluss, ein Protokoll, ein Register und/oder ein abstraktes generisches Device-Modell enthalten.

3. Verfahren nach einem der vorhergehenden Ansprüche, **dadurch gekennzeichnet, dass** nachfolgend zu Schritt ii) die Konnektivitätsdaten zu der Geräte-ID des weiteren Feldgeräts (3) von der IoT-Plattform angefordert werden, wenn diese nicht in der Datenbank (4) gespeichert sind, und die erhaltenen Konnektivitätsdaten und ggf. die Geräte-ID in der Datenbank (4) gespeichert werden.

4. Verfahren nach einem der vorhergehenden Ansprüche, **dadurch gekennzeichnet, dass** die IoT-Plattform (1) die weiteren Gerätedaten über ein angeschlossenes Terminal (5) anfordert.

5. Verfahren nach einem der vorhergehenden Ansprüche, **dadurch gekennzeichnet, dass** beim Vergleichen der Geräte-ID des weiteren Feldgeräts (2) mit in der Datenbank gespeicherten Geräte-IDs ein neuronales Netz verwendet wird.

6. Verfahren nach einem der vorhergehenden Ansprüche, **dadurch gekennzeichnet, dass** als Geräte-ID (3) ein Bild des Feldgeräts (2) oder von einem Teil des Feldgeräts übermittelt wird.

7. Verfahren nach einem der vorhergehenden Ansprüche, **dadurch gekennzeichnet, dass** als weitere Gerätedaten Positionsdaten des weiteren Feldgeräts (2), insbesondere GPS-Koordinaten seines Aufstellorts, gespeichert werden.

8. Verfahren nach Anspruch 7,
**dadurch gekennzeichnet, dass**
anhand der Positionsdaten eine Verknüpfung mit externen positionsspezifischen Daten erfolgt.

9. Verfahren nach Anspruch 8,
**dadurch gekennzeichnet, dass**
aus der Verknüpfung oder aus den externen positionsspezifischen Daten eine probabilistische Aussage/Simulation hinsichtlich der Lebensdauer oder einer Schadensursache abgeleitet wird.

10. Verfahren nach einem der vorhergehenden Ansprüche, **dadurch gekennzeichnet, dass** als weitere Gerätedaten Betriebsdaten, die im Betrieb des Feldgeräts (2) erfasst werden, gespeichert werden.

11. Verfahren nach dem vorhergehenden Anspruch, **dadurch gekennzeichnet, dass** die Betriebsdaten beim Betrieb des weiteren Feldgeräts (2) regelmäßig/laufend aktualisiert werden.

12. Verfahren nach einem der vorhergehenden Ansprüche, **dadurch gekennzeichnet, dass** eine Kategorisierung der Feldgeräte, deren Geräte-ID in der Datenbank gespeichert sind, erstellt wird.

13. System mit einer IoT-Plattform (1), die Zugriff auf eine Datenbank (4) hat, und mindestens einem weiteren Feldgerät (2), zur Durchführung des Verfahrens nach einem der Ansprüche 1 - 11.

## Claims

1. Method for operating a further field device in a system containing an IoT platform that has access to a database, wherein the database stores a device ID identifying the device type and connectivity data for at least one field device linked to the IoT platform and a device ID identifying the device type and connectivity data of another field device, having the following steps:
i. transferring a device ID (3), identifying the device type, of the further field device to the IoT platform (1),
ii. comparing the device ID (3) of the further field device with device IDs of the field devices and the other field devices that are stored in the database (4),
iii. if the device ID of the further field device matches a device ID stored in the database (4): transferring the connectivity data related to the device ID of the further field device (3) to the IoT platform (1),
- making a connection between the further field device (2) and the IoT platform (1) by using the transferred connectivity data,
- transferring further device data of the further field device (2) to the IoT platform (1) and storing the further device data of the further field device in association with the device ID in the database (4),
- evaluating the further device data of the further field device (2) and/or of other devices (7) connected to the IoT platform (1),
- outputting a signal, which is based on the evaluation, for operating the further field device (2) and/or other devices (7) directly or indirectly connected to the IoT platform.

2. Method according to Claim 1, **characterized in that** the connectivity data contain information about a port, a protocol, a register and/or an abstract generic device model.

3. Method according to either of the preceding claims, **characterized in that** after step ii) the connectivity data pertaining to the device ID of the further field device (3) are requested by the IoT platform if they are not stored in the database (4), and the received connectivity data and optionally the device ID are stored in the database (4).

4. Method according to one of the preceding claims, **characterized in that** the IoT platform (1) requests the further device data via a connected terminal (5).

5. Method according to one of the preceding claims, **characterized in that** a neural network is used for comparing the device ID of the further field device (2) with device IDs stored in the database.

6. Method according to one of the preceding claims, **characterized in that** the device ID (3) transferred is an image of the field device (2) or of a part of the field device.

7. Method according to one of the preceding claims, **characterized in that** the further device data stored are position data of the further field device (2), in particular GPS coordinates of its installation location.

8. Method according to Claim 7, **characterized in that** the position data are used to perform a logic combination with external position-specific data.

9. Method according to Claim 8, **characterized in that** the logic combination or the external position-specific data is/are used to infer a probabilistic statement/simulation with regard to service life or a cause of damage.

10. Method according to one of the preceding claims, **characterized in that** the further device data stored are operating data acquired during operation of the field device (2).

11. Method according to the preceding claim, **characterized in that** the operating data are regularly/continually updated during operation of the further field device (2).

12. Method according to one of the preceding claims, **characterized in that** a categorization of the field devices whose device IDs are stored in the database is produced.

13. System containing an IoT platform (1) that has access to a database (4), and at least one further field device (2), for carrying out the method according to one of Claims 1 - 11.

## Revendications

1. Procédé d'exploitation d'un appareil de terrain supplémentaire dans un système comprenant une plate-forme IdO ayant accès à une base de données, dans lequel un ID d'appareil, caractérisant le type d'appareil, et des données de connectivité pour au moins un appareil de terrain connecté à la plate-forme IdO, et un ID d'appareil, caractérisant le type d'appareil, et des données de connectivité d'un autre appareil de terrain, sont stockés dans la base de données, comprenant les étapes ci-dessous :
i. transmettre à la plate-forme IdO (1) un ID d'appareil (3), caractérisant le type d'appareil, de l'appareil de terrain supplémentaire
ii. comparer l'ID d'appareil (3) de l'appareil de terrain supplémentaire avec des ID d'appareil des appareils de terrain et des autres appareils de terrain stockés dans la base de données (4)
iii. en cas de correspondance de l'ID d'appareil de l'appareil de terrain supplémentaire avec un ID d'appareil stocké dans la base de données (4) : transmettre les données de connectivité associées à l'ID d'appareil de l'appareil de terrain (3) supplémentaire à la plate-forme IdO (1),
- établir une connexion entre l'appareil de terrain (2) supplémentaire et la plate-forme IdO (1) en utilisant les données de connectivité transmises,
- transmettre des données d'appareil supplémentaires de l'appareil de terrain (2) supplémentaire à la plate-forme IdO (1) et stocker les données d'appareil supplémentaires de l'appareil de terrain supplémentaire dans la base de données (4) en les associant à l'ID d'appareil,
- évaluer les données d'appareil supplémentaires de l'appareil de terrain (2) supplémentaire et/ou d'autres appareils (7) raccordés à la plate-forme IdO (1),
- émettre un signal basé sur ladite évaluation en vue de l'exploitation de l'appareil de terrain (2) supplémentaire et/ou d'autres appareils raccordés directement ou indirectement à la plate-forme IdO (7).

2. Procédé selon la revendication 1, **caractérisé en ce que** les données de connectivité contiennent des informations sur un raccordement, un protocole, un registre et/ou un modèle d'appareil générique abstrait.

3. Procédé selon l'une quelconque des revendications précédentes, **caractérisé en ce que**, à la suite de l'étape ii), les données de connectivité à l'ID d'appareil de l'appareil de terrain (3) supplémentaire sont demandées par la plate-forme IdO lorsque lesdites données de connectivité ne sont pas stockées dans la base de données (4), et les données de connectivité obtenues et éventuellement l'ID d'appareil sont stockés dans la base de données (4).

4. Procédé selon l'une quelconque des revendications précédentes, **caractérisé en ce que** la plate-forme IdO (1) demande les données d'appareil supplémentaires par l'intermédiaire d'un terminal (5) raccordé.

5. Procédé selon l'une quelconque des revendications précédentes, **caractérisé en ce qu'**un réseau neuronal est utilisé lors de la comparaison de l'ID d'appareil de l'appareil de terrain (2) supplémentaire avec des ID d'appareil stockés dans la base de données.

6. Procédé selon l'une quelconque des revendications précédentes, **caractérisé en ce qu'**une image de l'appareil de terrain (2) ou d'une partie de l'appareil de terrain est transmise en tant qu'ID d'appareil (3).

7. Procédé selon l'une quelconque des revendications précédentes, **caractérisé en ce que** des données de position de l'appareil de terrain (2) supplémentaire, en particulier des coordonnées GPS de son lieu d'installation, sont stockées en tant que données supplémentaires d'appareil.

8. Procédé selon la revendication 7, **caractérisé en ce qu'**une mise en relation avec des données externes spécifiques à la position a lieu à l'aide des données de position.

9. Procédé selon la revendication 8, **caractérisé en ce qu'**une proposition/simulation probabiliste concernant la durée de vie ou une cause de dommage est dérivée de la mise en relation ou des données externes spécifiques à la position.

10. Procédé selon l'une quelconque des revendications précédentes, **caractérisé en ce que** des données d'exploitation, qui sont enregistrées pendant l'exploitation de l'appareil de terrain (2), sont stockées en tant que données d'appareil supplémentaires.

11. Procédé selon la revendication précédente, **caractérisé en ce que** les données d'exploitation sont mises à jour régulièrement/en continu lors de l'exploitation de l'appareil de terrain (2) supplémentaire.

12. Procédé selon l'une quelconque des revendications précédentes, **caractérisé en ce qu'**une catégorisation des appareils de terrain dont l'ID d'appareil est stocké dans la base de données est créée.

13. Système comprenant une plate-forme IdO (1) ayant accès à une base de données (4) et au moins un appareil de terrain (2) supplémentaire et permettant de mettre en œuvre le procédé selon l'une quelconque des revendications 1 à 11.
